# EUROPÄISCHE PATENTSCHRIFT

(11) **EP 4 015 843 B1**
(45) Veröffentlichungstag und Bekanntmachung des Hinweises auf die Patenterteilung: **16.07.2025**
(21) Anmeldenummer: 21199779.6
(22) Anmeldetag: 29.09.2021
(51) Int. Cl.: F16B 5/02, F16B 43/00, F16B 1/00

(54) **BAUTEILVERBINDUNG SOWIE VERBINDUNGSEINRICHTUNG**
COMPONENT CONNECTION AND CONNECTION DEVICE
LIAISON DE COMPOSANTS, AINSI QUE DISPOSITIF DE LIAISON

(30) Priorität: 17.12.2020 DE 102020133939
(43) Veröffentlichungstag der Anmeldung: 22.06.2022
(73) Patentinhaber: CLAAS Tractor S.A.S., 78141 Vélizy-Villacoublay Cedex (FR)
(72) Erfinder: Robigo, Eric, 78800 Houilles-France (FR); Jardet, Gilles, 91380 Chilly Mazarin (FR)
(74) Vertreter: CLAAS Gruppe

(56) Entgegenhaltungen:
- EP-B1- 2 667 041
- DE-A1- 4 029 587
- JP-A- 2014 148 941
- US-A- 4 050 771

## Beschreibung

Die Erfindung betrifft eine Bauteilverbindung gemäß dem Oberbegriff von Anspruch 1.

Bei dem Warmbauteil kann es sich insbesondere um ein metallisches Bauteil handeln, das in wärmeleitendem Kontakt mit einer Wärmequelle steht.

Beispielsweise kann es sich um ein Blech handeln, das Teil eines Verbrennungsmotors ist. Bei dem Kaltbauteil kann es sich insbesondere um ein Bauteil handeln, das von einem temperaturempfindlichen Material gebildet ist und daher eine gewisse Grenztemperatur nicht überschreiten darf, um Beschädigungen des Kaltbauteils zu vermeiden. Das Bauteil kann beispielsweise von einem temperaturempfindlichen Kunststoff gebildet sein.

Der Bereich der Verbindungstechnik kennt eine Vielzahl von Bauteilverbindungen der eingangs beschriebenen Art. Beispielsweise ist in der US 4,050,771 eine vormontagefähige Bauteilverbindung zum kraftschlüssigen Verbinden eines Steuergeräts und einer Lichtmaschine beschrieben. Das Montieren wird mittels einer Schauben-Mutter-Verbindung realisiert, wobei die zugehörige Schraube einen quadratischen Schaft aufweist und eine thermische Entkopplung des Steuergeräts von der Lichtmaschine mittels eines Wärmeisolators erfolgt. Hierzu ist der Wärmeisolator mit einer quadratischen Ausnehmung zur Aufnahme des quadratischen Schafts der Schraube, sowie - im Querschnitt betrachtet - mit einer U-förmigen Aufnahme für ein Bauteil mit einer höheren relativen Temperatur versehen. Diese Ausgestaltung ist insoweit nachteilig, als das Bauteil mit der niedrigeren relativen Temperatur zwangsläufig in direkten Wärme übertragenden Kontakt mit der Bauteilverbindung ist.

Verbindungsmittel sind verzugsweise aus Metall gefertigt, da dies gute Festigkeitseigenschaften und eine gute Temperaturresistenz aufweist. Allerdings ist die hohe Wärmeleitfähigkeit von Metallen nachteilig, insofern je nach Einsatzzweck temperaturempfindliche Bauteile thermisch entkoppelt oder die Verbindungsmittel zuverlässig vor Wärme geschützt werden müssen, um Beschädigungen der temperaturempfindlichen Bauteile zu vermeiden. Letzteres ist aufwendig zu erzielen, da sich zusätzlich die Luft innerhalb einer Baugruppe und somit Verbindungselemente, deren Oberflächen in direktem Kontakt mit der erwärmten Luft kommen, erhitzen. Infolgedessen kann ein Verbindungsmittel auch ein temperaturempfindliches Bauteil, welches nicht in direktem Kontakt mit der erwärmten Luft steht, trotzdem thermisch beeinflussen.

Gemäß dem genannten Dokument des Standes der Technik verformt ein Kopf der Schraube bei der Montage einen ihm zugewandten Teil des Wärmeisolators in der Form, dass die beiden Schenkel der U-förmigen Aufnahme an das Bauteil mit der höheren relativen Temperatur gedrückt werden. Ferner soll sich der Wärmeisolator nicht rotierbar in einer quadratischen Ausnehmung des Bauteils mit der höheren relativen Temperatur befinden. Diese Ausgestaltung ermöglicht den Ausgleich axialer Fertigungstoleranzen. Hierbei ist es nachteilig, dass die Montage nur durch Rotation der Mutter erfolgen kann. Infolgedessen ist die Montage bei zu großem radialem Spiel zwischen dem Wärmeisolator und dem Bauteil mit der höheren relativen Temperatur nicht möglich.

Eine weitere Bauteilverbindung gemäß den oberbegrifflichen Merkmalen des Anspruchs 1 ist aus der JP 2014 148941 A1 bekannt.

Der Erfindung liegt nunmehr die Aufgabe zugrunde, die Bauteilverbindung der eingangs beschriebenen Art derart weiterzuentwickeln, dass das Kaltbauteil und/oder das Warmbauteil von dem Verbindungsmittel thermisch entkoppelt werden können. Ausgehend von einer Bauteilverbindung der eingangs beschriebenen Art wird die zugrunde liegende Aufgabe erfindungsgemäß durch eine Bauteilverbindung gemäß Anspruch 1 gelöst, wobei die Verbindungseinrichtung mindestens zwei Wärmeisolatoren umfasst, die formschlüssig miteinander verbindbar sind und mittels derer das Warmbauteil und/oder das Kaltbauteil thermisch von dem Verbindungsmittel entkoppelt ist bzw. sind. Einer der beiden Wärmeisolatoren ist dazu eingerichtet, Fertigungstoleranzen auszugleichen. Vorteilhafte Ausführungen ergeben sich aus den Merkmalen der Unteransprüche.

Die erfindungsgemäße Ausgestaltung ermöglicht, dass das Warmbauteil oder das Kaltbauteil, insbesondere auch beide Bauteile, von dem Verbindungsmittel entkoppelt sind. Der mindestens eine Wärmeisolator ist so ausgestaltet, dass ein direkter Wärme übertragender Kontakt zwischen den thermisch zu entkoppelnden Bauteilen verhindert ist. Insbesondere ist der unmittelbare wärmeübertragende Kontakt zwischen dem Kaltbauteil, welches beispielsweise aus einem temperaturempfindlichen Kunststoff bestehen kann, und dem Warmbauteil, welches beispielsweise aus Metall, vorzugsweise Stahl, gefertigt sein kann, verhindert.

Vorteilhafterweise ist das Verbindungsmittel thermisch von dem Warmbauteil entkoppelt. Auf diese Weise sind Temperaturschwankungen des Verbindungsmittels vermeidbar, die das Verbindungsmittel negativ beeinflussen können. Insbesondere kann die Festigkeit und Lebensdauer des Verbindungsmittels infolge von Temperaturschwankungen negativ beeinflusst werden. In jedem Fall ist jedoch sichergestellt, dass das Kaltbauteil, das sensitiv gegenüber Wärme ist, thermisch von dem Warmbauteil entkoppelt ist. Hierzu kann es insbesondere von Vorteil sein, zusätzlich das Kaltbauteil von dem Verbindungsmittel thermisch zu entkoppeln, um das Kaltbauteil für den Fall einer unerwünschten Erhitzung des Verbindungsmittels vor Wärme zu schützen.

Um das mitunter sehr aufwendige Minimieren von Fertigungstoleranzen zu vermeiden und trotzdem das Montieren der Bauteile zu ermöglichen, ist zumindest einer der beiden Wärmeisolatoren in vorteilhafter Weise so ausgestaltet, dass axiale und radiale Fertigungstoleranzen ausgeglichen werden können. Zusätzlich ermöglicht der Ausgleich von axialen Toleranzen die Verwendung von gleichen Wärmeisolatoren für die Montage von Warmbauteilen und Kaltbauteilen mit unterschiedlichen Materialstärken.

Gemäß einer vorteilhaften Ausgestaltung der erfindungsgemäßen Bauteilverbindung kann zumindest einer der beiden Wärmeisolatoren dem Warmbauteil oder dem Kaltbauteil zugeordnet sein, vorzugsweise unmittelbar mit dem Warmbauteil bzw. dem Kaltbauteil in Kontakt stehen. Diese Ausführungsform hat den Vorteil, dass entweder das Kaltbauteil und/oder das Warmbauteil durch den mindestens einen Wärmeisolator thermisch entkoppelt von dem Verbindungsmittel sind bzw. ist. Somit kann insbesondere das Warmbauteil in direktem wärmeübertragenden Kontakt mit dem Verbindungsmittel stehen, letzteres jedoch von dem Kaltbauteil thermisch entkoppelt sein. Ein Wärmeübergang auf das Kaltbauteil ist dann wunschgemäß nicht möglich.

Die Verwendung von mindestens zwei Wärmeisolatoren, die formschlüssig miteinander verbindbar sind, verhilft zu einer verbesserten thermischen Entkopplung des Kaltbauteils von dem Warmbauteil. Insbesondere können das Warm- oder das Kaltbauteil von verschiedenen Seiten her jeweils mittels eines Wärmeisolators thermisch abgeschirmt sein. Der vorteilhafte Formschluss ermöglicht zudem eine werkzeuglose Montage der beiden Wärmeisolatoren entweder separat an einem der Bauteile oder untereinander. Insbesondere können die Wärmeisolatoren aufeinander abgestimmte Formschlussbereiche aufweisen, die ineinander greifen und dadurch eine Kraft übertragende Verbindung ausbilden.

Erfindungsgemäß sind beide Wärmeisolatoren gemeinsam entweder dem Warmbauteil oder dem Kaltbauteil zugeordnet, vorteilhafterweise derart, dass ein unmittelbarer wärmeübertragender Kontakt zwischen dem Warmbauteil bzw. dem Kaltbauteil und dem Verbindungsmittel unterbunden ist. Erfindungsgemäß ist weiterhin ein erster Wärmeisolator einer Unterseite und mindestens ein zweiter Wärmeisolator einer Oberseite des Warmbauteils bzw. des Kaltbauteils zugeordnet sind. Hierdurch wird eine verbesserte thermische Entkopplung erzielt. Bei Anordnung der Wärmeisolatoren an dem Kaltbauteil ist es insbesondere möglich, das Kalbbauteil zu einer Seite hin mittels des einen Wärmeisolators gegen das Warmbauteil und zur anderen Seite hin beispielsweise gegen einen Endkopf des Schraubbolzens thermisch zu isolieren. Auf diese Weise können die Wärmeisolatoren die thermische Entkopplung des Kaltbauteils bzw. des Warmbauteils von dem Verbindungsmittel bewirken.

Erfindungsgemäß ist weiterhin vorgesehen, dass beide Wärmeisolatoren einen Formschlussbereich aufweisen. Sofern beide Wärmeisolatoren derartige Formschlussbereiche auswirken, sind letzte vorzugsweise aufeinander abgestimmt, sodass die Wärmeisolatoren besonders einfach formschlüssig miteinander zusammengefügt werden können. Beispielsweise kann der Formschlussbereich eines Wärmeisolators hakenförmig ausgebildet sein und mit einer korrespondierenden Anschlagfläche eines Formschlussbereichs des anderen Wärmeisolators eingreifen. Hierdurch kann insbesondere eine werkzeuglose Montage der Wärmeisolatoren miteinander ermöglicht sein, welche sich vorteilhaft auf die Vormontage auswirkt. Eine formschlüssige Verbindung der Wärmeisolatoren miteinander zudem eine werkzeuglose Montage.

Erfindungsgemäß ist weiterhin vorgesehen, dass zumindest ein Formschlussbereich der Wärmeisolatoren einer Ausnehmung des Warmbauteils bzw. des Kaltbauteils, die das Warmbauteil bzw. das Kaltbauteil von dessen Unterseite bis zu dessen Oberseite durchdringt, zugeordnet ist und sich durch die Ausnehmung hindurch erstreckt. Infolgedessen wird eine verbesserte thermische Entkopplung des Bauteils, dessen Ausnehmung durchdrungen ist, erzielt, indem ein unmittelbarer wärmeübertragender Kontakt des Schraubbolzens mit einer inneren Mantelfläche des jeweiligen Bauteils im Bereich der Ausnehmung unterbunden ist.

Sofern zwei Wärmeisolatoren zum Einsatz kommen, die miteinander verbunden sowie auf einander gegenüberliegenden Seiten des Warm- bzw. des Kaltbauteils angeordnet sind, kann es von Vorteil sein, wenn die Wärmeisolatoren mittels ihrer Verbindung miteinander an dem jeweiligen Bauteil befestigt sind. Eine unmittelbare Befestigung an dem Bauteil liegt dann nicht zwingenderweise vor. Stattdessen ist es denkbar, dass die Wärmeisolatoren gemeinsam das Warm- bzw. das Kaltbauteil "einfassen", wobei insbesondere eine relative Bewegbarkeit des jeweiligen Bauteils gegenüber den Wärmeisolatoren innerhalb eines gewissen Bereichs möglich sein kann. Somit ist es beispielsweise denkbar, dass die Wärmeisolatoren miteinander im Bereich einer Ausnehmung des Warm- bzw. des Kaltbauteils verbunden sind, wobei eine Bewegbarkeit des jeweiligen Bauteils in eine Durchdringungsrichtung der Ausnehmung relativ zu den Wärmeisolatoren erhalten bleibt. Diese Bewegbarkeit kann insbesondere dadurch begrenzt sein, dass das jeweilige Bauteil in Richtung seiner einen Seite (z.B. der Unterseite) an diesem Wärmeisolator und in Richtung der anderen Seite (z.B. der Oberseite) an dem anderen Wärmeisolator anschlägt. Dieses "Spiel" des Warm- bzw. des Kaltbauteils relativ zu den Wärmeisolatoren über die Länge einer axialen, bezogen auf die Durchdringungsrichtung der Ausnehmung betrachteten Strecke beschreibt ein Toleranzmaß zum Ausgleich von Fertigungstoleranzen. Vorteilhafterweise ist insbesondere das Montieren von Warmbauteilen und Kaltbauteilen unterschiedlicher Materialstärke unter Verwendung der gleichen Wärmeisolatoren möglich.

Eine weitere vorteilhafte Ausführungsform der Bauteilverbindung sieht vor, dass eine Ausnehmung des Warmbauteils und/oder des Kaltbauteils in Form eines Langlochs ausgebildet ist, sodass zumindest das Verbindungsmittel, vorzugsweise die gesamte Verbindungseinrichtung, in Richtung einer Längsachse der Ausnehmung innerhalb eines Toleranzbereichs relativ zu dem Warmbauteil bzw. dem Kaltbauteil bewegbar ist. Eine solche Ausnehmung bietet den Vorteil, dass insbesondere radiale Fertigungstoleranzen ausgleichbar sind.

Es ist weiterhin möglich, dass der Schraubbolzen den mindestens einen Wärmeisolator durchdringt, wobei vorzugsweise ein Endkopf des Schraubbolzens einen Durchmesser einer Ausnehmung des Wärmeisolators übersteigt. Hierdurch werden das Kaltbauteil, das Warmbauteil, sowie der mindestens eine Wärmeisolator formschlüssig verbunden, ohne das ein zusätzliches Bauteil, insbesondere eine Unterlegscheibe, benötigt wird.

Vorteilhafterweise ist das Warmbauteil von Metall gebildet, insbesondere von einem Stahlblech. Diese Form der Ausführung ist vorteilhaft, insofern Metall, insbesondere Stahl, gute temperaturresistente Eigenschaften aufweist. Betreffend das Kaltbauteil kann eine Ausgestaltung vorteilhaft sein, bei der selbiges von einem temperaturempfindlichen Kunststoff gebildet ist.

### Ausführungsbeispiel

Die Erfindung ist nachstehend anhand eines Ausführungsbeispiels, das in den Figuren dargestellt ist, näher erläutert. Es zeigt:
- Fig. 1:: Eine Explosionsdarstellung der erfindungsgemäßen Bauteilverbindung,
- Fig. 2:: Eine Seitenansicht entsprechend der Fig. 1,
- Fig. 3:: Einen Schnitt durch die zusammengebaute Bauteilverbindung entsprechend der Schnittebene A-A in Fig. 2,
- Fig. 4:: Einen vergrößerten Teilausschnitt entsprechend der Fig. 3,
- Fig. 5:: Eine Seitenansicht der vormontierten Bauteilverbindung,
- Fig. 6:: Einen Schnitt durch die vormontierte Bauteilverbindung entsprechend der Schnittebene C-C in Fig. 5.

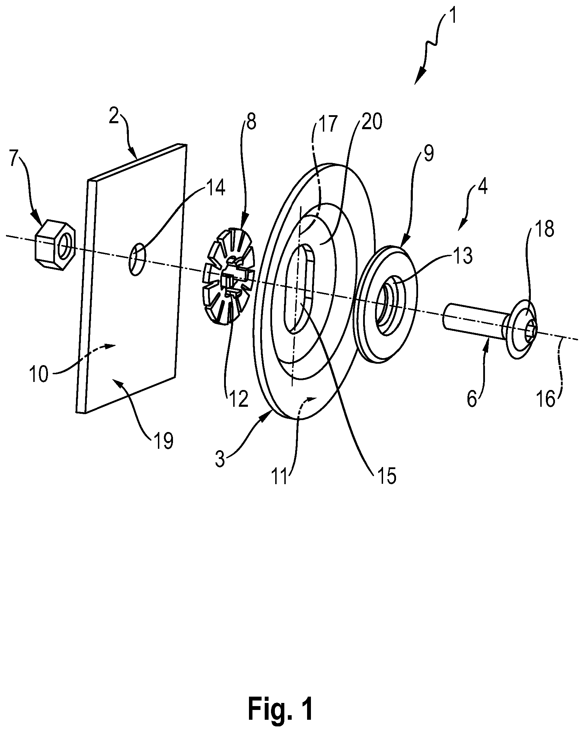

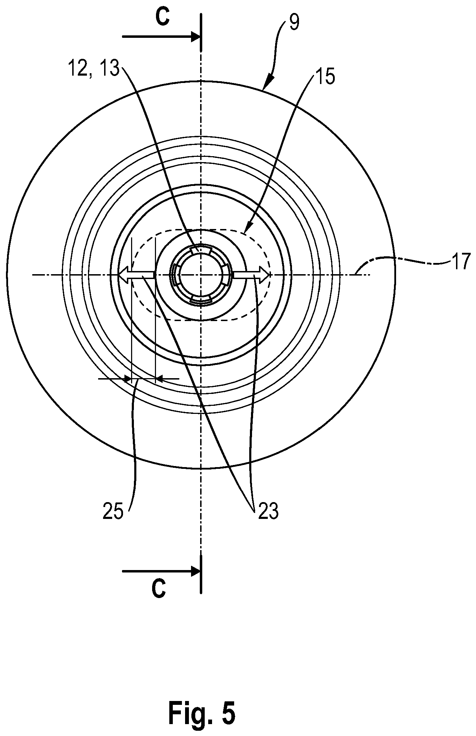

Ein Ausführungsbeispiel, das in den **Figuren 1 bis 6** gezeigt ist, umfasst eine erfindungsgemäße Bauteilverbindung **1,** die ein Verbindungsmittel **5,** ein Warmbauteil **2,** zwei Wärmeisolatoren **8, 9** und einem Kaltbauteil **3** umfasst. Zum formschlüssigen Verbinden der Wärmeisolatoren **8, 9** weisen diese jeweils einen Formschlussbereich **12, 13** auf. Ferner sind das Warmbauteil **2,** welches hier aus Metall, vorzugsweise Stahl, gefertigt ist, und das Kaltbauteil **3,** welches von temperaturempfindlichen Kunststoff gebildet ist, mit Ausnehmungen **14, 15** zum Durchdringen mit einem Schraubenbolzen **6** versehen. Die Bauteilverbindung **1** wird mittels eines Endkopfs **18** am Schraubenbolzen **6** und eine Schraubenmutter **7** montiert.

Zur Vormontage wird der Formschlussbereich **12** des ersten Wärmeisolators **8** durch die Ausnehmung **15** des Kaltbauteils **3** auf den Formschlussbereich **13** des zweiten Wärmeisolators **9** aufgeschoben. Hierbei umfasst der Formschlussbereich **12** des ersten Wärmeisolators **8** Hakenelemente **26,** die dazu geeignet sind, mit einem von dem Formschlussbereich **13** des zweiten Wärmeisolators **9** bereitgestellten Anschlagkragen **27** einzugreifen. Dadurch entsteht eine formschlüssige Verbindung zwischen den Wärmeisolatoren **8, 9,** zwischen denen das Kaltbauteil **3** gelagert ist. Eine unmittelbare Kraft übertragende Verbindung zwischen den Wärmeisolatoren **8, 9** und dem Kaltbauteil **3** besteht nicht. Somit bleibt das Kaltbauteil **3** innerhalb eines gewissen Bereichs relativ zu den Wärmeisolatoren **8, 9** bewegbar, wobei sich dieser Bereich zwischen einander zugewandten Flächen der Wärmeisolatoren **8, 9** erstreckt, die das Kaltbauteil **3** gewissermaßen von dessen Unterseite **11** sowie dessen Oberseite **20** einfassen.

Zur weiteren Montage wird der Schraubbolzen **6** entlang einer Durchdringungsachse **16** durch die Ausnehmung **15,** beginnend beim zweiten Wärmeisolator **9,** geschoben, bis der Endkopf **18** des Schraubbolzen **6** plan von einer dem Kaltbauteil **3** abgewandten Seite am Formschlussbereich **13** des zweiten Wärmeisolators **9** anliegt. Die Wärmeisolatoren **8, 9** weisen entsprechende Ausnehmungen auf und werden entsprechend ebenfalls von dem Schraubbolzen **6** durchdrungen. Im Anschluss wird ein an der dem Kaltbauteil **3** abgewandten Seite über den ersten Wärmeisolator **8** vorstehender Schaft des Schraubbolzens **6** durch die Ausnehmung **14** des Warmbauteils **2** geschoben und abschließend mit der Schraubenmutter **7** auf der dem Kaltbauteil **2** abgewandten Seite des Warmbauteils **2** befestigt. Zur Montage weisen sowohl die Schraubmutter **7** als auch der Schraubbolzen **6** jeweils komplementäre Gewinde auf, mittels derer die Schraubmutter **7** und der Schraubbolzen **6** mittels Verschraubens verbunden werden. Andere Verbindungstechniken sind gleichermaßen möglich.

Bei der Bauteilverbindung **1** kann es sich insbesondere um eine solche zum Einsatz an Fahrzeugen, vorzugsweise landwirtschaftlichen Arbeitsmaschinen, handeln. Das Warmbauteil **2** kann in unmittelbarem Kontakt mit einer Wärmequelle, insbesondere einem Motor der Arbeitsmaschine, stehen. Bei einer solchen Ausgestaltung weist das Warmbauteil **2** nur dann eine im Vergleich zum Kaltbauteil **3** höhere Temperatur auf, wenn der Motor der Arbeitsmaschine in Betrieb ist.

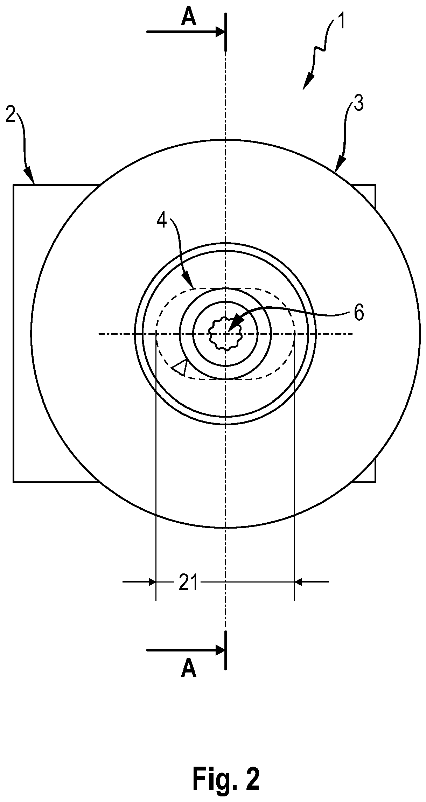

Die Ausnehmung **15** des Kaltbauteils **3** ist hier in Form eines Langlochs mit einer Länge **21** ausgestaltet, wie aus **Figur 2** zu entnehmen ist. Entlang einer Längsachse **17** der Ausnehmung **15** weist die Verbindungseinrichtung **4** mit ein Toleranzmaß **25** auf. Durch dieses Toleranzmaß **25** hat die Verbindungseinrichtung **4** ein Spiel in Richtung der Pfeile **23,** wodurch radiale Fertigungstoleranzen ausgeglichen werden können.

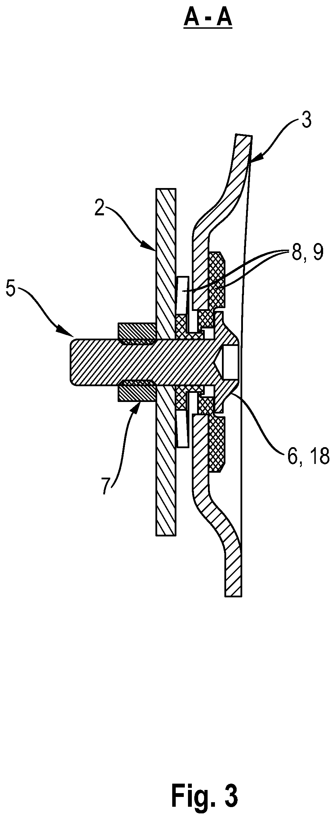

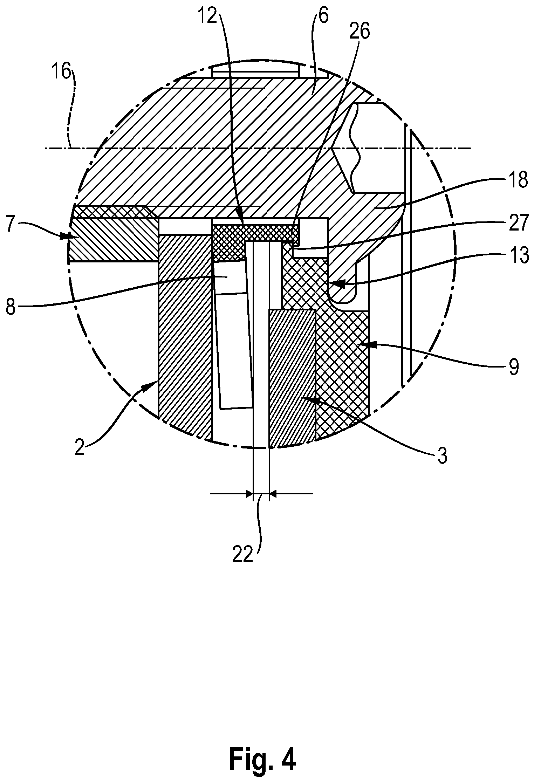

**Figur 3** zeigt den Schnitt entlang der Schnittebene A-A gemäß **Figur 2** und dient zur Veranschaulichung der in **Figur 4** dargestellten Vergrößerung der Bauteilverbindung **1.** Der Formschlussbereich **12** des ersten Wärmeisolators **8,** der die Ausnehmung **15** des Kaltbauteils **3** durchdringt, ist mittels zugehöriger Hakenelemente **26** formschlüssig mit einem zugehörigen Anschlagkragen **27** des Formschlussbereichs **13** des zweiten Wärmeisolators **9** verbunden. Somit ist das Kaltbauteil **3** zwischen den sich gegenüberliegend auf der Unterseite **11** und der Oberseite **20** angeordneten Wärmeisolatoren **8, 9** parallel zur Durchdringungsrichtung **16** insoweit gelagert, als es abgesehen von einem axialen Spiel sich lediglich zwischen den Wärmeisolatoren **8, 9** bewegen kann.

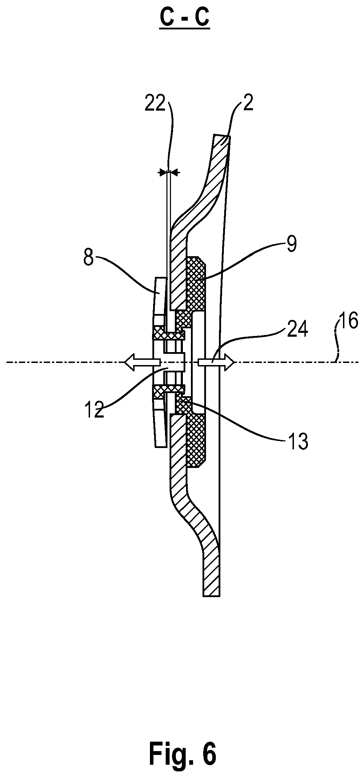

Abhängig von der Materialstärke des Kaltbauteils **3** ergibt sich entlang des Formschlussbereichs **12** ein Toleranzmaß **22,** in dem sich das Kaltbauteil **3** entsprechend der Pfeile **24** bewegen kann. Dies ergibt sich besonders gut anhand von **Figur 6****.** Insbesondere können damit axiale Fertigungstoleranzen ausgeglichen werden. In den Ausführungsbeispielen steht das Warmbauteil **2** in unmittelbarem Kontakt mit dem Verbindungsmittel **5.** Allerdings kann mittels eines weiteren Wärmeisolators angeordnet zwischen dem Warmbauteil **2** und der Schraubmutter **7,** welcher in den Figuren nicht abgebildet ist, in analoger Ausführung das Warmbauteil **3** von der Verbindungseinrichtung **4** thermisch entkoppelt werden.

Der Endkopf **18** des Schraubenbolzens **6** weist einen Durchmesser auf, der größer als ein Ausnehmung des Wärmeisolators **9** ist, wodurch ein vorzugsweise planes Anliegen des Endkopfs **18** an dem Formschlussbereich **13** des Wärmeisolators **9** erreicht wird.

### Bezugszeichenliste

- 1: Bauteilverbindung
- 2: Warmbauteil
- 3: Kaltbauteil
- 4: Verbindungseinrichtung
- 5: Verbindungsmittel
- 6: Schraubbolzen
- 7: Schraubmutter
- 8: Wärmeisolator
- 9: Wärmeisolator
- 10: Unterseite
- 11: Unterseite
- 12: Formschlussbereich
- 13: Formschlussbereich
- 14: Ausnehmung
- 15: Ausnehmung
- 16: Durchdringungsachse
- 17: Längsachse
- 18: Endkopf
- 19: Oberseite
- 20: Oberseite
- 21: Länge
- 22: Toleranzmaß
- 23: Pfeil
- 24: Pfeil
- 25: Toleranzmaß
- 26: Hakenelement
- 27: Anschlagkragen

## Patentansprüche

1. Bauteilverbindung (1), umfassend
- ein Warmbauteil (2), das eine erste Temperatur aufweist,
- ein Kaltbauteil (3), das eine gegenüber der Temperatur des Warmbauteils (2) verringerte Temperatur aufweist, sowie
- eine Verbindungseinrichtung (4),
wobei die Verbindungseinrichtung (4) ein Verbindungsmittel (5) mit einem Schraubbolzen (6) und einer korrespondierend zu dem Schraubbolzen (6) ausgebildeten Schraubmutter (7) aufweist,
wobei mittels Zusammenwirkens des Schraubbolzens (6) mit der Schraubmutter (7) ein mittelbarer oder unmittelbarer formschlüssiger Eingriff des Verbindungsmittels (5) sowohl mit dem Warmbauteil (2) als auch mit dem Kaltbauteil (3) hergestellt ist, sodass das Warmbauteil (2) und das Kaltbauteil (3) in Kraft übertragender Weise miteinander verbunden sind,
wobei die Verbindungseinrichtung (4) mindestens zwei Wärmeisolatoren (8, 9) umfasst, die formschlüssig miteinander verbindbar sind und mittels derer das Warmbauteil (2) und/oder das Kaltbauteil (3) thermisch von dem Verbindungsmittel (5) abgeschirmt sind,
wobei zumindest einer der beiden Wärmeisolatoren (8, 9) dazu eingerichtet ist, Fertigungstoleranzen auszugleichen,
wobei beide Wärmeisolatoren (8, 9) dem Warmbauteil (2) oder dem Kaltbauteil (3) derart zugeordnet sind, dass ein unmittelbarer wärmeübertragender Kontakt zwischen dem Warmbauteil (2) bzw. dem Kaltbauteil (3) und dem Verbindungsmittel (5) unterbunden ist,
wobei mindestens ein erster Wärmeisolator (8) einer Unterseite (10, 11) und mindestens ein zweiter Wärmeisolator (9) einer Oberseite (19, 20) des Warmbauteils (2) bzw. des Kaltbauteils (3) zugeordnet sind,
wobei beide Wärmeisolatoren (8, 9) miteinander verbunden sind und einen Formschlussbereich (12, 13) aufweisen,
wobei zumindest ein Formschlussbereich (12, 13) der Wärmeisolatoren (8, 9) einer Ausnehmung (14, 15) des Warmbauteils (2) bzw. des Kaltbauteils (3), die das Warmbauteil (2) bzw. das Kaltbauteil (3) von dessen Unterseite (10, 11) bis zu dessen Oberseite (19, 20) durchdringt, zugeordnet ist,
wobei sich zumindest ein Formschlussbereich (12, 13) durch die Ausnehmung (14, 15) hindurch erstreckt,
wobei die miteinander korrespondierenden Formschlussbereiche (12, 13) und infolgedessen die zugehörigen Wärmeisolatoren (8, 9) formschlüssig miteinander verbunden sind, und
**dadurch gekennzeichnet, dass**
zumindest einer der miteinander verbundenen Wärmeisolatoren (8, 9) zumindest in Richtung einer Durchdringungsachse (16) der Ausnehmung (14, 15) relativ zu dem Warmbauteil (2) bzw. dem Kaltbauteil (3) bewegbar ist, sodass eine innerhalb eines Toleranzbereichs liegende Fertigungstoleranz des Warmbauteils (2) bzw. des Kaltbauteils (3) in Richtung der Durchdringungsachse (16) ausgleichbar ist.

2. Bauteilverbindung (1) nach Anspruch 1, **dadurch gekennzeichnet, dass** zumindest einer der beiden Wärmeisolatoren (8, 9) dem Warmbauteil (2) oder dem Kaltbauteil (3) zugeordnet ist, vorzugsweise unmittelbar mit dem Warmbauteil (2) bzw. dem Kaltbauteil (3) in Kontakt steht.

3. Bauteilverbindung (1) nach Anspruch 1 oder 2, **dadurch gekennzeichnet, dass** eine Ausnehmung (14, 15) des Warmbauteils (2) und/oder des Kaltbauteils (3) in Form eines Langlochs ausgebildet ist, sodass die Verbindungseinrichtung (4) in Richtung einer Längsachse (17) der Ausnehmung (14, 15) innerhalb eines Toleranzbereichs relativ zu dem Warmbauteil (2) bzw. dem Kaltbauteil (3) bewegbar ist.

4. Bauteilverbindung (1) nach einem der vorhergehenden Ansprüche, **dadurch gekennzeichnet, dass** der Schraubbolzen (6) den mindestens einen Wärmeisolator (8, 9) durchdringt, wobei vorzugsweise ein Endkopf (18) des Schraubbolzens (5) einen Durchmesser einer Ausnehmung des Wärmeisolators (8, 9) übersteigt.

5. Bauteilverbindung (1) nach einem der vorhergehenden Ansprüche, **dadurch gekennzeichnet, dass** das Warmbauteil (2) in unmittelbarem Kontakt mit dem Verbindungsmittel (5) steht.

## Claims

1. A component connection (1), comprising:
- a warm component (2), which is at a first temperature,
- a cold component (3), which is at a lower temperature compared with the temperature of the warm component (2), as well as
- a connection device (4),
wherein the connection device (4) has a connection means (5) with a threaded bolt (6) and a threaded nut (7) which corresponds to the threaded bolt (6),
wherein, by means of cooperation of the threaded bolt (6) with the threaded nut (7), an indirect or direct interlocking engagement of the connection means (5) is produced with both the warm component (2) as well as with the cold component (3), so that the warm component (2) and the cold component (3) are connected together in a force-transmitting manner,
wherein the connection device (4) comprises at least two thermal insulators (8, 9) which can be connected to each other by interlocking and by means of which the warm component (2) and/or the cold component (3) can be thermally shielded from the connection means (5),
wherein at least one of the two thermal insulators (8, 9) is configured to compensate for manufacturing tolerances, wherein both thermal insulators (8, 9) are associated with the warm component (2) or the cold component (3) in a manner such that a direct heat-transferring contact between the warm component (2) or the cold component (3) and the connection means (5) is prevented,
wherein at least one first thermal insulator (8) is associated with a lower side (10, 11) and at least one second thermal insulator (9) is associated with an upper side (19, 20) of the warm component (2) or the cold component (3),
wherein both thermal insulators (8, 9) are connected together and have an interlocking region (12, 13),
wherein at least one interlocking region (12, 13) of the thermal insulators (8, 9) is associated with a recess (14, 15) of the warm component (2) or the cold component (3) which penetrates the warm component (2) or the cold component (3) from its lower side (10, 11) to its upper side (19, 20),
wherein at least one interlocking region (12, 13) extends through the recess (14, 15),
wherein the mutually corresponding interlocking regions (12, 13), and as a result the associated thermal insulators (8, 9), are connected together by interlocking, and
**characterized in that**
at least one of the mutually connected thermal insulators (8, 9) can be moved relative to the warm component (2) or the cold component (3) at least in the direction of a penetrating axis (16) of the recess (14, 15), so that a manufacturing tolerance of the warm component (2) or the cold component (3) lying within a tolerance range can be compensated for in the direction of the penetrating axis (16).

2. The component connection (1) according to claim 1, **characterized in that** at least one of the two thermal insulators (8, 9) is associated with the warm component (2) or the cold component (3), preferably in direct contact with the warm component (2) or the cold component (3).

3. The component connection (1) according to claim 1 or claim 2, **characterized in that** a recess (14, 15) of the warm component (2) and/or the cold component (3) is constructed in the form of an elongated hole, so that the connection device (4) can be moved relative to the warm component (2) or the cold component (3) in the direction of a longitudinal axis (17) of the recess (14, 15) within a tolerance range.

4. The component connection (1) according to one of the preceding claims, **characterized in that** the threaded bolt (6) penetrates through the at least one thermal insulator (8, 9), wherein preferably, a head end (18) of the threaded bolt (5) exceeds a diameter of a recess of the thermal insulator (8, 9).

5. The component connection (1) according to one of the preceding claims, **characterized in that** the warm component (2) is in direct contact with the connection means (5).

## Revendications

1. Assemblage de composants (1) comprenant
- un composant chaud (2) qui présente une première température,
- un composant froid (3) présentant une température qui est réduite par rapport à la température du composant chaud (2), ainsi que
- un dispositif d'assemblage (4),
le dispositif d'assemblage (4) présentant un moyen d'assemblage (5) comprenant un boulon (6) et un écrou (7) réalisé de manière à correspondre au boulon (6),
la coopération du boulon (6) avec l'écrou (7) ayant pour effet de créer un engagement par complémentarité de formes, indirect ou direct, du moyen d'assemblage (5) aussi bien avec le composant chaud (2) qu'avec le composant froid (3), de sorte que le composant chaud (2) et le composant froid (3) sont reliés l'un à l'autre de manière à transmettre des forces,
le dispositif d'assemblage (4) comprenant au moins deux isolateurs thermiques (8, 9) qui peuvent être reliés l'un à l'autre par complémentarité de formes et à l'aide desquels le composant chaud (2) et/ou le composant froid (3) sont protégés sur le plan thermique du moyen d'assemblage (5),
au moins un des deux isolateurs thermiques (8, 9) étant conçu pour compenser des tolérances de fabrication,
les deux isolateurs thermiques (8, 9) étant associés au composant chaud (2) ou au composant froid (3) de manière à ce qu'un contact direct de transmission de chaleur entre le composant chaud (2) ou le composant froid (3) et le moyen d'assemblage (5) soit empêché,
au moins un premier isolateur thermique (8) étant associé à une face inférieure (10, 11) et au moins un deuxième isolateur thermique (9) étant associé à une face supérieure (19, 20) du composant chaud (2) et du composant froid (3),
les deux isolateurs thermiques (8, 9) étant reliés l'un à l'autre et présentant une zone de complémentarité de formes (12, 13)
au moins une zone de complémentarité de formes (12, 13) des isolateurs thermiques (8, 9) étant associée à un évidement (14, 15) du composant chaud (2) ou du composant froid (3) qui traverse le composant chaud (2) ou le composant froid (3) depuis sa face inférieure (10, 11) jusqu'à sa face supérieure (19, 20),
au moins une zone de complémentarité de formes (12, 13) s'étendant à travers l'évidement (14, 15),
sachant que les zones de complémentarité de formes (12, 13) qui se correspondent, et par conséquent les isolateurs thermiques (8, 9) associés, sont reliées entre elles par complémentarité de formes, et
**caractérisé en ce que**
au moins un des isolateurs thermiques (8, 9) reliés entre eux peut être déplacé par rapport au composant chaud (2) ou au composant froid (3), au moins dans le sens d'un axe de pénétration (16) de l'évidement (14, 15), de sorte qu'une tolérance de fabrication du composant chaud (2) ou du composant froid (3) qui se situe dans une plage de tolérance peut être compensée dans le sens de l'axe de pénétration (16).

2. Assemblage de composants (1) selon la revendication 1, **caractérisé en ce qu'**au moins un des deux isolateurs thermiques (8, 9) est associé au composant chaud (2) ou au composant froid (3), de préférence directement au composant chaud (2) ou au composant froid (3).

3. Assemblage de composants (1) selon la revendication 1 ou 2, **caractérisé en ce qu'**un évidement (14, 15) du composant chaud (2) et/ou du composant froid (3) est réalisé sous forme de trou oblong, de sorte que le dispositif d'assemblage (4) peut être déplacé dans une plage de tolérance par rapport au composant chaud (2) ou au composant froid (3), dans le sens d'un axe longitudinal (17) de l'évidement (14, 15).

4. Assemblage de composants (1) selon une des revendications précédentes, **caractérisé en ce que** le boulon (6) traverse l'isolateur thermique (8, 9), au nombre d'au moins un, une tête d'extrémité (18) du boulon (5) dépassant de préférence un diamètre d'un évidement de l'isolateur thermique (8, 9).

5. Assemblage de composants (1) selon une des revendications précédentes, **caractérisé en ce que** le composant chaud (2) est en contact direct avec le moyen d'assemblage (5).
